# EUROPÄISCHE PATENTANMELDUNG

(11) **EP 2 348 294 A1**
(43) Veröffentlichungstag der Anmeldung: **27.07.2011**
(21) Anmeldenummer: 10194288.6
(22) Anmeldetag: 09.12.2010
(51) Int. Cl.: G01J 5/02, G01J 5/04, G01J 5/08, G01J 5/10, G01J 5/12

(54) **Thermopile-Infrarot-Sensor in Monolithischer Si-Mikromechanik**

(30) Priorität: 18.01.2010 DE 102010004938; 07.10.2010 DE 102010042108
(71) Anmelder: Heimann Sensor GmbH, 01109 Dresden (DE)
(72) Erfinder: Forg, Bodo, 55116 Mainz (DE); Herrmann, Frank, 01809 Dohna (DE); Leneke, Wilhelm, 65232 Taunusstein (DE); Schieferdecker, Jörg, 01157 Dresden (DE); Simon, Marion, 65307 Bad Schwalbach (DE); Storck, Karlheinz, 55218 Ingelheim (DE); Schulze, Mischa, 65510 Hünstetten (DE)
(74) Vertreter: Lippert, Stachow & Partner

(57) **Zusammenfassung**

Die Erfindung betrifft einen thermischen Infrarot Sensor in einem Gehäuse mit Optik sowie einem Chip mit Thermoelementen auf einer Membran, die über einem gut Wärme leitenden rahmenförmigen Tragkörper aufgespannt ist, wobei der Tragkörper senkrechte oder annähernd senkrechte Wände aufweist. Durch die Erfindung soll ein Thermopile-Infrarot-Sensor in monolithischer Silizium-Mikromechanik angegeben werden, der bei kleiner Chipgröße ein hohes thermisches Auflösungsvermögen, einen hohen Füllgrad und eine hohe Ansprechgeschwindigkeit aufweist. Erreicht wird das dadurch, dass die Thermopile-Sensorstruktur aus wenigen, langen Thermoelementen (16) pro Sensorzelle (1) besteht, die auf Verbindungsstegen (6) angeordnet sind, welche die heißen Kontakte (9) auf einer Absorberschicht (5) mit den kalten Kontakten (8) der Thermoelemente (16) miteinander verbinden; dass die Membran (3) über einen oder mehrere Verbindungsstege (6) aufgehängt ist; dass die Membran (3) beiderseits der langen Thermoelemente (16) schmale Schlitze aufweist, die die Verbindungsstege (6) sowohl vom zentralen Bereich (4), als auch vom Tragkörper (2) trennen, und dass mindestens der zentrale Bereich (4) von der Absorberschicht (5) überdeckt wird.

## Beschreibung

Die Erfindung betrifft einen Thermischer Infrarot Sensor in einem Gehäuse mit Optik sowie einem Chip mit Thermoelementen in Form von Thermopile-, Bolometer- oder pyroelektrischen Sensorstrukturen auf einer Membran, die über einem gut Wärme leitenden rahmenförmigen Tragkörper aufgespannt ist, wobei der Tragkörper senkrechte oder annähernd senkrechte Wände aufweist.

Bekannt sind Infrarot-Sensoren, die in Silizium Mikromechanik Technologie hergestellt werden können in verschiedenen Spielarten.

Zum Beispiel wird in der US 2003/0054179 A1 eine Sensorzelle, u.a. für Thermopiles, mit einer dünnen Membran und einem darauf gebrachten Absorber vorgestellt.

Das Trägersubstrat unter der Sensorstruktur wird über ein nasschemisches Ätzverfahren der Oberflächen Mikromechanik ausgehöhlt, wobei zum Ätzangriff Schlitze in die Membran geätzt werden. Dieses Nassätzverfahren erzeugt schräge Wände. Die Tiefe der Freimachung erreicht in keinem Falle die gesamte Substrattiefe. Das bedeutet, das je kleiner die Sensorstruktur in ihren lateralen Abmessungen ist, desto geringer die Ätztiefe.

Wird kein Hochvakuum verwendet, reduziert die Wärmeleitung des Restgases bzw. des Füllgases im Sensorgehäuse die erzielbare Temperaturdifferenz zwischen Absorberbereich, d.h. den "warmen Kontakten" und der Wärmesenke, d.h. dem Trägersubstrat.

Wenn die absorbierte IR Strahlung eine geringere Temperaturdifferenz erzeugt, verringert sich auch die erzielbare Empfindlichkeit der Sensorzelle. Die Verwendung eines Füllgases wird nicht beschrieben.

In Kanno, T. et. Al. (NEC Corp.) : " Uncooled focal plane array having 128x128 thermopile detector elements" in B. Andersen (Ed.), Infrared Technology, Proc. SPIE 2269, Vol XX, San Diego, July 1994, S. 450-459 wird ein monolithisches Thermopile Sensorarray angegeben, in dem die Sensorelemente in einer Oberflächen- Mikromechanik Technologie mit Opferschicht hergestellt werden. Der Abstand zwischen Sensorstruktur und Wärmesenke im Substrat ist deutlich geringer als die Substratdicke selbst. Die Lösung erlaubt ein relativ gutes Auflösungsvermögen nur für den Fall, dass der Sensorchip im hochvakuumdichten Gehäuse verkappt ist. Wiederum lassen sich bei kostengünstigen Gehäuseaufbauten unter geringem Restgasdruck oder mit einem Füllgas keine ausreichenden Empfindlichkeiten herstellen.

In der DE 693 29 708 T2 bzw. der EP 0 599 364 B1 geht es um ein Herstellverfahren für Infrarot-Strahlungssensoren, bei dem die Empfindlichkeit dadurch verbessert wird, dass ein Vakuumgehäuse oder ein Gehäuse verwendet wird, das mit einem thermisch nur geringfügig leitendem Gas gefüllt ist.

Bei dem Herstellverfahren geht es darum, wie das Vakuum oder der Gasaustausch bewerkstelligt werden können, ohne dass die Membran, auf der sich das Sensorelement befindet, durch Druckdifferenzen beschädigt wird. Von besonderem Interesse ist dabei der Gasaustausch in dem Hohlraum unter der Membran - als Berstdruckdifferenz für die verwendeten Siliziumoxid/Siliziumnitrid-Membranen werden etwa 300 Torr angegeben.

Neben Vertiefungen in der Bodenplatte und verschieden geformten Distanzstücken werden auch Öffnungen in der Membran als Belüftungsmethoden angegeben.

Alle Zeichnungen zeigen nass geätzte, schräge Ätzgrubenwände. Zwischen Basisplatte und Substrat befindet sich ein Entlüftungsspalt, der vorzugsweise zum Druckausgleich zwischen dem Bereich oberhalb und unterhalb der Membran dient.

Die vorgestellte Lösung enthält Schlitze in der Membran, die aber keine optimale Flächennutzung zulassen, was durch das gezeigte Ätzverfahren mit schrägen Wänden verhindert wird. Der Einfluss einer Membranschlitzung auf die thermischen Verhältnisse im Chip wird nicht berücksichtigt.

In der Patentschrift DE 102 60 408 A1 wird eine thermische Strahlungssensorzeile mit einer geschlitzten Thermopilezeile dargestellt. Basis ist die Stapelung mehrerer Thermopilezeilen übereinander. Die Schlitze werden nicht dafür eingesetzt, um die Empfindlichkeit zu erhöhen, sondern damit die Subzeilen immer durch die Schlitze der darüber liegenden Zeile "sehen" können.

Das Auflösungsvermögen des Systems soll auf diese Weise erhöht werden. Aus der beschriebenen Anordnung ergeben sich aber zahlreiche Nachteile. Die Prozesskosten erhöhen sich um den Faktor der Anzahl der verwendeten gestapelten Zeilen, die exakte Ausrichtung der einzelnen Chips übereinander, sowie deren Verbindung miteinander, bedeuten ebenso erheblichen technologischen und finanziellen Aufwand und die Pixel können nur zur Realisierung einer Zeile dienen, da diese nicht quadratisch, und somit untauglich zur Erzeugung eines zweidimensionalen Infrarotbildes sind. Des Weiteren ist die Membran durch rückseitiges, anisotropes Nassätzen strukturiert, was zu einer erheblichen Vergrößerung der Sensorstruktur durch die schrägen Wände der Wärmesenke führt. Lediglich die Schlitze wurden durch reaktives Ionenätzen (RIE) trocken geätzt. Die erwähnte Materialpaarung der Thermopiles (Bismut / Antimon) sowie das Absorbermaterial (Silber-Schwarzschicht) sind kaum CMOSkompatibel. Ein weiterer Nachteil ist die hohe Temperaturabhängigkeit der Empfindlichkeit der erwähnten Materialpaarung. Hinzuzufügen ist, dass die angestrebte Vervielfachung des Auflösungsvermögens immer durch das optische System limitiert wird, da die einzelnen Subzeilen in unterschiedlichen Scharfebenen liegen und deshalb nur ein Kompromiss bei der Wahl der bildseitigen Brennweite eingegangen werden kann. Eine Gasfüllung, bzw. ein die Sensorzellen umgebenden Gehäuses mit verringertem Innendruckes, um die Empfindlichkeit durch die verringerte Wärmeleitfähigkeit des Gases zu erhöhen, wird nicht beschrieben.

In HORIBA product information: "8x8 element thermopile Imager"; in Tech Jam International, 26. Sept. 2002 wird ein monolitisches Thermopile- Sensorarray angegeben, welches in Bulk Si-Mikromechanik-Technologie hergestellt wird. Die 64 Elemente befinden sich auf einem 8x8 mm großen Chip, wobei jedes Element durch Si- Wände in Nassätztechnik thermisch separiert wird. Die technologisch bedingte Größe des Chips führt zu relativ hohen Herstellungskosten und steht wiederum kostengünstigen Massenanwendungen entgegen.

Neben diesen Thermopile- Lösungen gibt es weitere Lösungen zu kostengünstigen Infrarot Arrays.

In der US PS 4,472,239 A und der US PS 4,654,622 werden thermische Sensorstrukturen mit dünner Membran und Schlitzen zur Herausätzung von Teilen des darunter liegenden Trägersubstrates vorgestellt. In beiden Fällen erreichen die darunter liegenden Ausnehmungen nur geringe Tiefe, was - wie bei vorangehend beschriebenen Lösungen nur eine geringe Empfindlichkeiten bei kostengünstigen Gehäuselösungen ohne Hochvakuumdichtigkeit zulassen.

In der DE 199 54 091 A1, sowie der US PS 6,342,667 werden Thermopile Sensorzellen beschrieben, bei denen durch Schlitzstrukturen in Form großer Dreiecke im Randbereich der Membran bzw. in Form eines Kreuzes in der Mitte der Membran die Ausnehmung unterhalb der Sensorstruktur frei geätzt wird. In beiden Fällen erfolgt das durch ein Nassätzverfahren, welches durch schräge Wände keine großen Abstände zur Wärmesenke entstehen lässt. Die Vielzahl von parallel angeordneten Thermoelementen verhindert große Temperaturunterschiede zwischen heißen und kalten Kontakten und damit das Erreichen hoher Signalempfindlichkeiten.

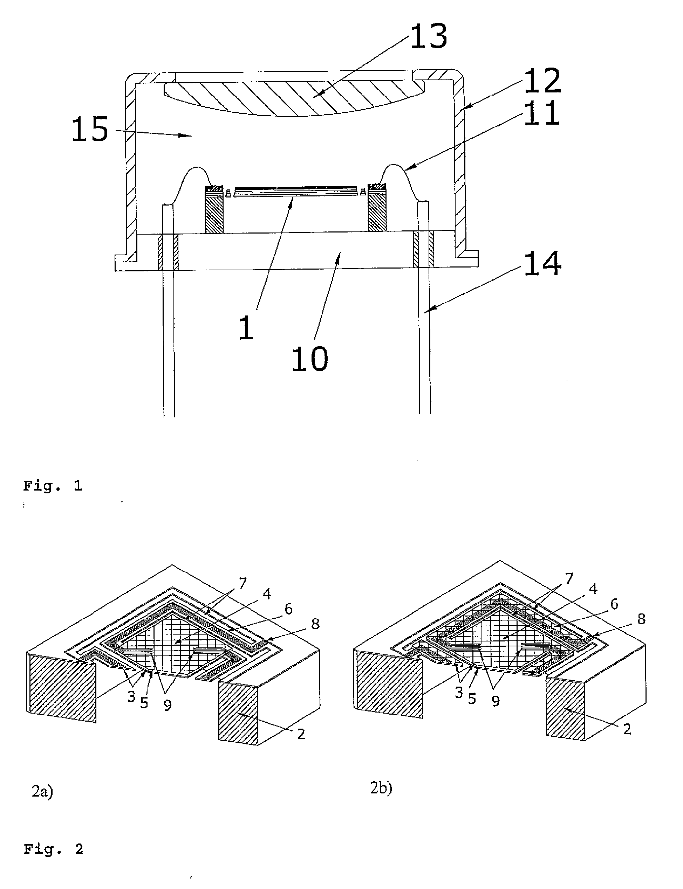

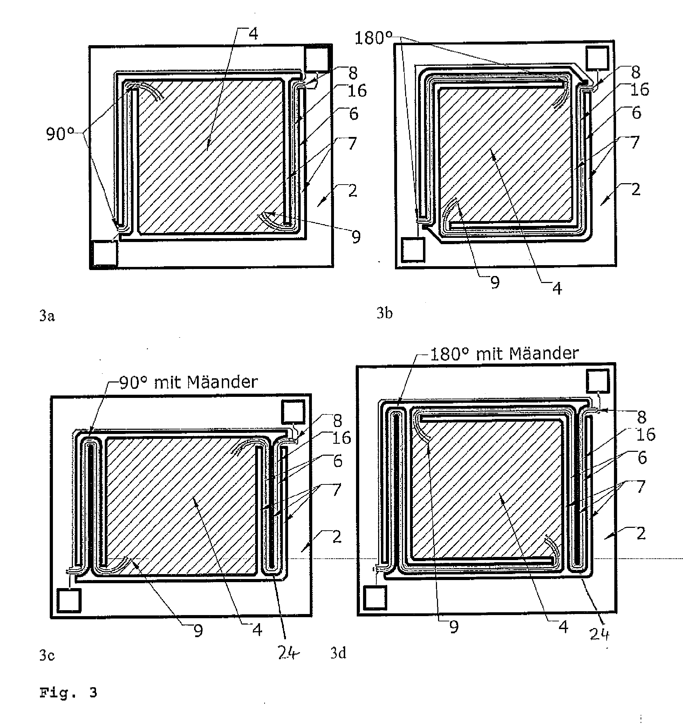

In der DE 198 43 984 A1 werden Zellen von Infrarot-Strahlungssensoren vorgestellt. Die Ausführung in Fig. 1 enthält senkrechte Wände, die durch das gesamte Substrat hindurch gehen. Allerdings auch eine Vielzahl von eher "kurzen" Thermoelementen, die - wie bereits beschrieben - keine hohe Empfindlichkeit zulassen. In den weiteren Ausführungsbeispielen Fig. 2 e) und Fig. 3 a) wiederum werden Oberflächen-Mikromechanik Lösungen zur Erzeugung der Ausnehmung vorgestellt, wobei die Ätzung durch eine Öffnung der Membran erfolgt. Die Tiefe der Ätzung kann bis zu 50..200 µm betragen. Wiederum führt der kurze Abstand zwischen Sensorstruktur und Wärmesenke von max. 200 µm auf Grund der Wärmeleitfähigkeit des Gases dazu, dass keine hohen Empfindlichkeiten möglich sind. Möglichkeiten zur Reduktion der Wärmeleitfähigkeit durch Gase geringer Leitfähigkeit oder verminderten Druckes werden nicht beschrieben.

In der EP 0 869 341 A1 werden monolithische Bolometerstrukturen für ein Infrarot-Sensorarray vorgestellt. Bei diesen Bolometerstrukturen werden die Sensorelemente in einer Oberflächen- Mikromechanik Technologie hergestellt, wobei das Entfernen einer Opferschicht zu einer thermisch sehr gut isolierten Sensorbrücke in ca. 2.5 µm über dem Si-Substrat führt, das die Auswerteschaltung enthält.

Solche Infrarot-Bolometer mit Sensorbrücke gibt es inzwischen in vielen Spielarten. Weil sie sehr kleine Elementabmessungen erlauben, haben Sie eine weite Verbreitung bei hoch auflösenden Infrarotarrays erfahren. Prinzipiell werden mit diesem Verfahren trotz der kleinen Sensorelementabmessungen sehr gute Temperaturauflösungen erreicht.

Allerdings erfordern die kleinen Elementabmessungen an der Siliziumoberfläche zwingend eine hochvakuumdichte Verpackung des Sensorchips, die wiederum einer kostengünstigen Massenfertigung entgegenstehen. Die Möglichkeit, dieses Chip in einem kostengünstigen Gehäuse mit niedrig wärmeleitfähigen Gasen unter Normaldruck zu verschließen, würde die erreichbare Empfindlichkeit drastisch senken.

In der DE 40 91 364 C1 wird eine Thermopile Sensorzelle mit dünner Membran und geschlitzter Struktur vorgestellt. Der Absorberbereich wird über einen langen Beam und wenige Thermoelemente gehalten. In der Membran können sich Löcher oder Schlitze befinden. Der Beam mit den Thermoelementen, der eine Breite von 130 µm aufweisen kann, ist durch - allerdings ebenfalls recht breite - Schlitze vom Substratrand und dem Absorberbereich isoliert.

Das unter der Sensorstruktur liegende Trägersubstrat wird von der Rückseite her nass geätzt - mit entsprechenden schrägen Wänden im Substrat. Eine Füllung mit Schutzgas ist vorgesehen.

Mit einer solchen Lösung lassen sich prinzipiell höhere Temperaturunterschiede und Empfindlichkeiten erzielen. Allerdings verhindern die breiten Schlitze eine optimale Flächenausnutzung (Füllgrad) der Sensorzelle. Die nass geätzte Ausnehmung im Trägersubstrat weist nach außen gehende Wände auf, die gesamte Sensorzelle soll etwa 2x2 mm groß sein. Die schrägen, nach außen gehenden Substratwände, gestatten keine kleinen Sensorzellen oder Zellabstände (Arraystrukturen).

In den bekannten Lösungen werden somit thermische Infrarot Sensorzellen vorgeschlagen, die entweder auf Grund einer großflächigen Chiptechnologie oder zu geringem Abstand zwischen Sensorstruktur (Absorberbereich) und darunter liegendem Trägersubstrat oder einer aufwändigen Vakuum-Gehäusetechnologie keine kostengünstige Herstellung von thermischen Infrarot-Sensorzellen mit hoher Empfindlichkeit bei gleichzeitig hohem Füllgrad und einer einfachen Gehäusetechnologie ohne hoch Vakuum dichtem Gehäuseverschluss erlauben.

Aufgabe der Erfindung ist es, einen Thermopile-Infrarot-Sensor in monolithischer Si-Mikromechanik anzugeben, der bei kleiner Chipgröße ein hohes thermisches Auflösungsvermögen, einen hohen Füllgrad und eine hohe Ansprechgeschwindigkeit aufweist und unter Gas mit Normaldruck oder reduziertem Druck betrieben werden kann und ohne aufwendige Technologien zum Gehäuseverschluss unter Höchst-Vakuum kostengünstig mit Standard-CMOS-Prozessen in Massenstückzahlen hergestellt werden kann.

Die der Erfindung zugrunde liegende Aufgabe wird bei einem Thermopile-Infrarot-Sensor der eingangs genannten Art dadurch gelöst, dass die Thermopile-Sensorstruktur aus wenigen, langen Thermoelementen pro Sensorzelle besteht, die auf Verbindungsstegen angeordnet sind, welche die heißen Kontakte auf einer Absorberschicht auf der Membran mit den kalten Kontakten der Thermoelemente miteinander verbinden; dass die Membran über einen oder mehrere Verbindungsstege aufgehängt ist; dass die Membran beiderseits der langen Thermoelemente schmale Schlitze aufweist, die die Verbindungsstege sowohl vom zentralen Bereich, als auch vom Tragkörper trennen, und dass mindestens der zentrale Bereich von der Absorberschicht überdeckt wird.

Durch die Erfindung wird eine Thermopile-Sensorstruktur geschaffen, die eine besonders hohe Signalempfindlichkeit besitzt und einen hohen Füllgrad ermöglicht.

In einer ersten Ausgestaltung der Erfindung sind die Thermoelemente auf den langen schmalen Verbindungsstegen um den Absorberbereich herumgeführt, wobei die Länge eines Verbindungssteges mindestens der halben Länge, vorzugsweise der ganzen Seitenlänge des Absorberbereiches entspricht.

Eine weitere Ausgestaltung der Erfindung ist dadurch gekennzeichnet, dass die Thermoelemente auf den langen, schmalen Verbindungsstegen um den Absorberbereich herumgeführt sind, wobei die Länge eines Verbindungssteges der gesamten bis doppelten Seitenlänge des Absorberbereiches entspricht.

Weiterhin kann vorgesehen sein, dass die Thermoelemente auf langen, schmalen Verbindungsstegen um den Absorberbereich herumgeführt sind, wobei die Verbindungsstege mindestens eine Umkehrstelle aufweisen. Auf diese Weise lässt sich eine Mäanderform der Verbindungsstege mit somit größerer Länge realisieren.

Eine spezielle Ausgestaltung der Erfindung sieht vor, dass die schmalen Verbindungsstege mit den heißen Enden der Thermoelemente von mehreren Seiten an den Absorberbereich herangeführt sind.

Die Thermopile-Sensorstrukturen bestehen bevorzugt aus in einem CMOS-Prozess hergestellten n- und p-leitendem Poly Silizium.

Um eine geringe "thermische Masse" und hohe Ansprechgeschwindigkeit zu erzielen, sind die über den Thermopilestrukturen, beim Halbleiterprozess entstandenen Isolations-und Passivierungsschichten teilweise von der Oberseite her wieder entfernt.

Zur Erhöhung des Füllgrades erstreckt sich die dünne Absorberschicht mindestens teilweise auch auf die Verbindungsstege und bevorzugt sogar auf den gesamten Verbindungssteg und ist bis kurz vor die kalten Kontakte geführt.

Zum thermischen Ausgleich kann die Membran im Absorberbereich mit einer oder mehreren Poly Si Schichten ausgefüllt sein.

In einer weiteren Fortführung der Erfindung sind die Poly Silizium Schichten im Absorberbereich derart strukturiert, dass sie zur Reduktion der thermischen Masse verkleinert sind. Zum Beispiel, dass diese eine von der Mitte der Absorberschicht ausgehende Kreuzform aufweisen und wobei die Enden des Kreuzes die "heißen" Kontakte der Thermopilestrukturen umschließen oder diese zur Vermeidung von Kurzschlüssen nur einseitig berühren.

Weiterhin ist vorgesehen, dass die langen dünnen Verbindungsstege mit den Thermoelementen mindestens an einer Stelle durch einen Stabilisierungssteg mit dem benachbarten Substratkörper verbunden sind.

In einer weiteren Ausgestaltung der Erfindung sind mehrere Sensorzellen eng benachbart in Zeilen- oder Arrayform auf dem gleichen Sensorchip angeordnet, wobei mindestens ein Teil der Signalverarbeitung auf dem gleichen Halbleitersubstrat integriert ist, oder Sensorzellen je eine elektronische Signalverarbeitungseinheit pro Einzelzelle oder mindestens pro vier Einzelzellen gemeinsam aufweisen.

Die Optik der Thermoplie-Infrarot-Sensorstruktur kann im einfachsten Fall eine Filterscheibe oder eine abbildende Linse sein.

Die Optik kann auch aus einer fest im Gehäuse eingebauten ersten Linse, und einer sich außerhalb des Gehäuses befindlichen zweiten Linse bestehen, wobei beide Linsen zusammen die optische Abbildung erzeugen.

Alternativ besteht die Optik aus einer fest im Gehäuse eingebauten ersten Linse und einer sich außerhalb des Gehäuses befindlichen zweiten Linse, wobei die zweite Linse nicht gasdicht montiert sein muss, sondern auswechselbar sein kann.

Schließlich kann die Optik aus einer fest im Gehäuse eingebauten ersten Linse und einer sich außerhalb des Gehäuses befindlichen zweiten Linse bestehen, wobei die zweite Linse über eine Justiereinrichtung im Abstand zum Sensorelement verstellbar ist.

Die Erfindung wird an Hand der folgenden Figuren beschrieben. Es zeigen:
- Fig. 1:: den Grundaufbau eines erfindungsgemäßen Infrarot Sensors;
- Fig. 2:: einen Ausschnitt des Infrarotsensors mit der erfindungsgemäßen Thermopile- Sensorzelle a) mit Absorberschicht im zentralen Bereich und b) mit Absorberschicht über zentralem Bereich und Stegen;
- Fig. 3 a)..d): die Draufsicht auf eine erfindungsgemäße Thermopile- Sensorzelle mit verschiedenen Ausführungsformen für Schlitze und Stege;
- Fig. 4 a)..d): die Draufsicht auf eine erfindungsgemäße Thermopile- Sensorzelle mit verschiedenen Ausführungsformen für den zentralen Absorberbereich;
- Fig. 5 a, b):: einen Querschnitt) einer erfindungsgemäßen Thermopile Sensorzelle mit abgedünnten Passivierungsschichten;
- Fig. 6:: eine Ausführungsform mit Stabilisierungsrippen zwischen Absorberbereich und Steg bzw. Substrat
- Fig. 7:: eine weitere Ausgestaltung einer erfindungsgemäßen Sensorzelle mit mehreren Elementen sowie verschiedenen Ausführungsformen zur Unterbringung der pixelnahen Signalverarbeitung a) mit Signalelektronik im Randbereich b) mit je einer Signalelektronik pro Sensorelement und c) mit je einer Signalelektronik für jeweils 4 Sensorelemente;
- Fig.8 a, b):: weitere Ausgestaltungen der erfindungsgemäßen Sensorzelle mit verschiedenen Ausführungsformen der Optik mit innen oder außen montierter Optik; und
- Fig. 9 a, b):: eine Ausführungsform mit einer zweiten Linse mit veränderlichem Abstand.

Den prinzipiellen Aufbau eines erfindungsgemäßen Infrarot Sensors zeigen Fig. 1, 2. Die Sensorzelle 1 (Chip) mit einem Tragkörper 2, einer Membran 3, einem zentralen empfindlichen Bereich 4 mit einerAbsorberschicht 5 und Verbindungsstegen 6 wird auf einer Bodenplatte 10 montiert, die wiederum mit einer Kappe 12 verschlossen wird. In der Kappe 12 über der Sensorzelle befindet sich eine Optik 13 zur Durchleitung oder Fokussierung der Infrarotstrahlung vom Objekt auf den Absorber 5. Der Tragkörper 2 besteht aus einem Substrat aus einem Halbleitermaterial (z.B. Silizium), das unter den Sensorelementen durch Ätzung von der Rückseite her komplett ausgehöhlt ist, wobei im Bereich zwischen den Thermoelementen 16 dünne, senkrechte oder fast senkrechte Trennwände aus dem Halbleitersubstratmaterial verbleiben.

Die elektrischen Anschlüsse von den Sensorzellen auf dem Chip 1 werden über Verbindungsdrähte 11 zu externen Anschlüssen 14 geführt. Der Aufbau kann sowohl auf metallischen Bodenplatten 10 (wie z.B. Transistorgehäusen), als auch nichtmetallischen Bodenplatten 10 (z.B. Leiterplatten oder Keramikplatten) erfolgen.

Das in dem Gehäuse eingeschlossene Medium ist ein Gas oder Gasgemisch 15. Erfindungsgemäß hat dieses Gas 15 eine Wärmeleitfähigkeit, die geringer als die von Luft oder Stickstoff ist, um die Konvektion vom zentralen Bereich 4 (Absorberbereich) der Membran 3 (heiße Kontakte) zum Tragkörper 2 (kalte Kontakte) so gering wie möglich zu halten.

Vorzugsweise wird dafür ein Gas 15 mit hoher molarer Masse, z.B. Xenon, Krypton oder Argon, verwendet, oder ein Gas mit einem gegenüber normalen Luftdruck deutlich reduziertem Innendruck oberhalb von Höchstvakuum. Das Gehäuse muss so verschlossen sein, dass kein Gasaustausch mit der Umgebung erfolgt.

Den erfindungsgemäßen Aufbau der infrarotempfindlichen Sensorzelle 1 innerhalb des Sensorgehäuses selbst zeigt Fig. 2. Auf einem Tragkörper 2 (Substrat) aus Silizium oder einem anderen Halbleitermaterial befindet sich an der Oberseite des Tragkörpers eine dünne Membran 3 mit einem zentralen Bereich 4, der über einen oder mehrere dünne Verbindungsstege 6 aufgehängt ist. Die Verbindungsstege 6 sind durch erfindungsgemäße schmale Schlitze 7 sowohl vom zentralen Bereich 4 wie auch vom Tragkörper 2 getrennt.

Thermische Sensorstrukturen zur Umwandlung der Infrarotstrahlung in eine messbare Größe befinden sich auf dem zentralen Bereich 4 und den Verbindungsstegen 6. Diese Sensorstrukturen können z.B. an sich bekannte pyroelektrische bzw. thermoelektrische Strukturen oder Bolometerstrukturen sein.

Im Folgenden wird die Erfindung an Hand von thermoelektrischen Sensorstrukturen erläutert, den so genannten Thermopiles. Diese Thermopiles haben "kalte" Kontakte 8 oberhalb des als Wärmesenke dienenden Substratkörpers mit senkrechten Wänden und so genannte "heiße" Kontakte 9 auf dem zentralen Absorberbereich.

Durch die auf dem Absorberbereich absorbierte Infrarotstrahlung erwärmen sich die "heißen" Kontakte 9 gegenüber den "kalten" Kontakten 8, sofern das zu messende, außerhalb des Sensorgehäuses liegende Objekt eine höhere Temperatur als die Wärmesenke (Substratkörper 2) hat. Im entgegen gesetzten Fall kühlt sich der Absorberbereich ab, und es ergibt sich ein negativer Temperaturunterschied. Die thermoelektrischen Sensorstrukturen erzeugen eine Signalspannung, die proportional des Temperaturunterschiedes zwischen heißen und kalten Kontakten ist.

Um die Messempfindlichkeit (Signalspannung) der Sensorzelle zu erhöhen, müssen die heißen Kontakte 9 thermisch besonders gut von der Wärmesenke 2 isoliert werden, und die Größe des absorbierenden Bereiches soll gleichzeitig so groß wie möglich im Vergleich zur Gesamtzelle sein.

Erfindungsgemäß wird das dadurch gelöst, dass die Länge der Thermoschenkel 16 besonders lang ausgeführt ist, indem die Thermoschenkel nicht, wie üblich, auf geradem, direkten Weg mit den kalten Kontakten 8 verbunden werden, sondern über den Umweg langer, schmaler Verbindungsstege 6 (vgl. Fig. 3a - 3d). Während übliche Thermopile Sensoren eine große Anzahl von einzelnen Thermoschenkeln 16 aufweisen (typisch 40 ... 80, oft über 100 Stück Thermopaare pro einzelner Zelle), werden erfindungsgemäß nur eine geringe Zahl von maximal 20, typisch weniger als 10 Thermoelemente pro individueller Zelle ausgeführt. Die Schlitze 7, die die Stege vom Trägersubstrat und vom zentralen Absorberbereich trennen, haben eine maximale Breite von 10 µm, vorzugsweise sogar < 3 µm, um eine hohe Flächenauslastung zu erreichen.

Die Herstellung der Sensorzellen erfolgt beispielsweise in einem kostengünstigen CMOS-Prozess. Die Thermoelemente 16 (auch Thermoschenkel genannt) sind vorzugsweise aus n- und p-leitendem Silizium, Germanium oder einer Mischform davon hergestellt und haben Dicken von weniger als 1 µm. Die Wände des Tragekörpers 2 sind senkrecht oder nahezu senkrecht und reichen vorzugsweise bis zum Boden des Tragekörpers. Sie werden in einer so genannten Mikromechanik-Technologie (auch als MEMS bekannt), hergestellt, wie sie für MEMS (Mikro Mechanische Systeme) angewendet wird.

Das bevorzugte Verfahren ist z.B. das reaktive Ionenätzen (so genannter Deep RIE-Prozess), wobei von der Unterseite des Tragekörpers durch das gesamte Substrat bis zur Membran geätzt wird.

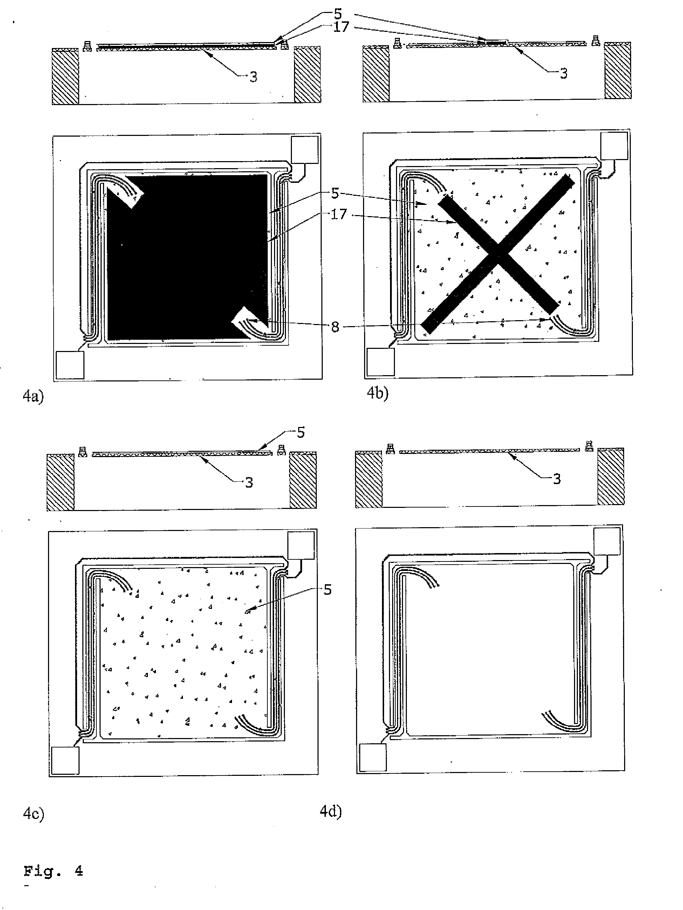

Die zur maximalen Absorption der Infrarotstrahlung des Messobjektes verwendete Absorberschicht 5 selbst ist sehr dünn, vorzugsweise « 1 µm, um eine geringe thermische Masse des Absorberbereiches zu erhalten und damit eine schnelle Ansprechgeschwindigkeit der Sensorelemente (Fig. 4). Oft wirkt die Absorberschicht 5 auch zusammen mit den darunter liegenden Schichten auf der dünnen Membran 3. Die Absorberschicht 5 wird in einem CMOS-kompatiblen Prozess hergestellt.

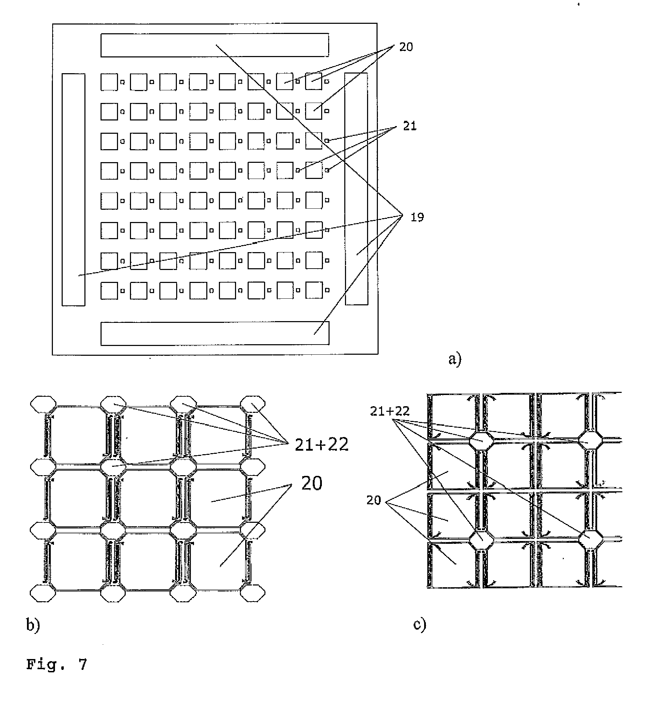

Für einelementige Sensorzellen mit kleinem Messfleck kann man den Absorber 5 auf den Zentralbereich 4 außerhalb der Stege begrenzen. Für mehrelementige Strukturen (siehe auch Fig. 7) kann der Absorber 5 auch auf die gesamten Verbindungsstege 6 oder zumindest einen Teil davon ausgedehnt werden (Fig. 1b) um den Füllfaktor zu erhöhen.

Im Folgenden werden Ausführungsformen für die Zellgeometrie - insbesondere für die Form der Stege 6 mit den Thermoschenkeln 16 und Isolations-Schlitzen 7 - beschrieben. Fig. 3a-d zeigen mehrere erfindungsgemäße Ausführungsformen für die Verbindungsstege 6 mit den Thermoschenkeln 16.

Üblicherweise wird der zentrale Bereich 4 über zwei oder vier Verbindungsstege 6 mit dem Tragkörper 2 verbunden. Dabei sollten die Verbindungsstege 6 mindestens die Länge einer halben Seite des zentralen Bereiches 4 haben. Typisch beträgt die Steglänge eine Seitenlänge (so genannte 90° Version Fig. 3a) oder zwei Seitenlängen (so genannte 180° Version Fig. 3b) des zentralen Bereiches 4.

Fig. 3b) zeigt solche längeren Stege über zwei Seiten des zentralen Bereiches 4 (180° Version). Weitere Ausgestaltungen haben noch längere Verbindungsstege 6, dadurch erzielt, dass die Form des Steges eine Wendestelle 24 aufweist, wodurch sich die Stegrichtung umkehrt und der Steg eine Mäanderform aufweist. Fig. 3c zeigt eine 90° Version mit mäanderförmigem Verbindungssteg 6 und Fig. 3 d) eine 180° Version mit mäanderförmigem Verbindungssteg 6.

Prinzipiell sind auch weitere Lösungen zwischen a)...d) denkbar, zum Beispiel Verbindungsstege 6 mit 1/2 Seitenlänge oder 1 ½ Seitenlängen. Es können auch weitere Mäander in die Verbindungsstege 6 eingefügt werden, um die Länge des Verbindungssteges 6 weiter zu verlängern. Je nach Anforderungen an Größe der Zelle, erreichbare Ansprechgeschwindigkeit, Druck und Art des Gases im Gehäuse, sowie thermischer Auflösung hat die eine oder die andere Variante Vorteile.

Fig.4. zeigt Ausgestaltungen des zentralen Bereiches 4. Fig. 4 a)..d) erfindungsgemäße Ausführungsformen für den zentralen Bereich 4 mit a, b) Absorptionsschicht und Poly-Si Ausgleichsschichten, c) Absorptionschicht und d) ohne Absorptions und Poly-Silizium-Ausgleichsschicht.

Wie schon erwähnt wird der zentrale Bereich 4 der Membran 3 mit einer Absorberschicht 5 bedeckt, die auch auf die Stege ausgedehnt werden kann. Aus dem CMOS- Prozess stehen Poly-Silizium Schichten zur Verfügung, aus denen die Thermoschenkel 16 aufgebaut sind. Sie können auch im zentralen Bereich genutzt werden, um zusätzlich zur Absorberschicht 5 einen guten und schnellen thermischen Ausgleich zwischen den verschiedenen Bereichen des Absorbers und den heißen Kontakten zu erreichen.

Es ergibt sich typisch in der Mitte des zentralen Bereiches 4 die größte Temperaturerhöhung. Würde man aber die Thermoschenkel 16 alle bis zur Mitte des zentralen Bereiches führen, so würde sich der elektrische Innenwiderstand der Thermoelemente und somit das Rauschen erhöhen.

Die Poly-Silizium-Flächen 17 können deshalb als thermische Ausgleichsschicht zwischen zentralem Bereich 4 und den weiter außen liegenden heißen Kontakten 8 genutzt werden. Die heißen Kontakte können auch anders auf dem Absorber verteilt werden, wobei die Thermoschenkel sich verbreitern, um den Innenwiderstand des Thermopiles nicht zu senken (nicht dargestellt in Fig. 3, 4).

Fig. 4a zeigt eine Version, bei der der ganze zentrale Bereich 4 mit mindestens einer Poly-Silizium-Bahn 17 bedeckt ist. Damit kann die höchste Signalempfindlichkeit bei geringem Rauschen (d.h. die höchste Nachweisbarkeit) erzielt werden. Die externen Poly Si Flächen umschließen dabei die heißen Kontakte nahezu. Bevorzugt bleibt mindestens aber einseitig eine Lücke zur Vermeidung von Kurzschlüssen.

Zur Erzielung einer hohen Ansprechgeschwindigkeit kann es vorteilhaft sein, die Poly-Silizium-Flächen 17 nicht auf den gesamten zentralen Bereich 4 auszudehnen, sondern nur kreuz- oder sternförmig aus dem Zentrum heraus (vgl. Fig. 4b) zu gestalten. Dadurch erreicht man eine geringere thermische Masse des zentralen Bereiches und damit eine höhere Ansprechgeschwindigkeit.

Eine hohe Ansprechgeschwindigkeit bei hohem Signal ist auch zu erzielen, wenn die Poly-Silizium-Schichten 17 bei vorhandener Absorberschicht weggelassen werden (Fig. 4c). Das Signal ist dabei etwas kleiner als mit Poly-Silizium-Ausgleichsflächen. Höchste Ansprechgeschwindigkeit bei allerdings geringem Signal wird durch Weglassen von Absorberschicht und Poly-Silizium-Schicht 17 erreicht.

Eine Erhöhung der Ansprechgeschwindigkeit bei hohem Signal lässt sich erreichen, wenn die während des CMOS Prozesses entstehenden Passivierungsschichten im Bereich des Absorbers bzw. im Bereich von Absorber und Stegen von der Oberseite her ganz oder teilweise wieder entfernt (abgedünnt) werden.

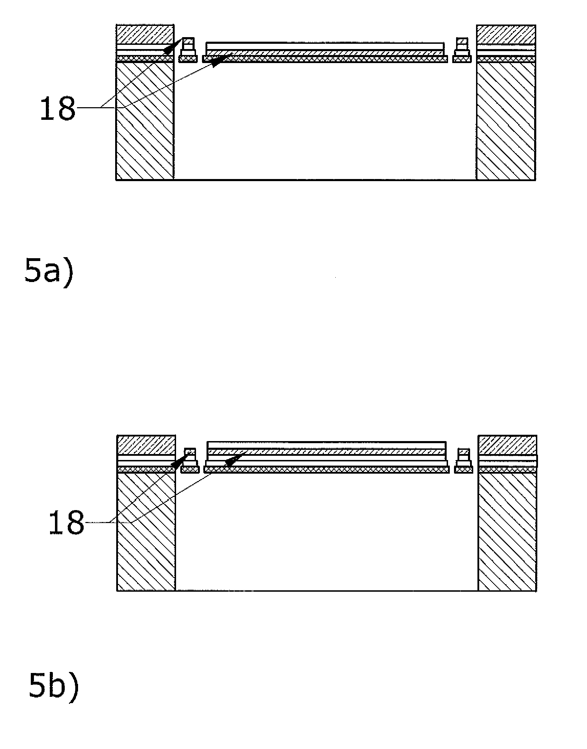

Fig. 5 a) und b) zeigen reduzierte Dicken der Passivierungsschichten 18 im Absorberbereich im Vergleich zum Außenbereich über dem Silizium-Tragekörper. Das Abdünnen erfolgt durch an sich bekannte nasschemische oder Trocken-Ätzverfahren von der Chipvorderseite.

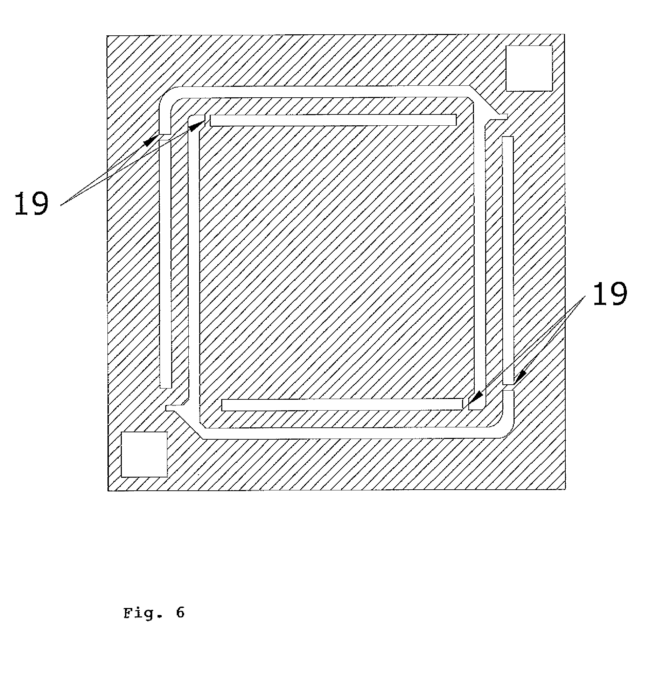

Eine Möglichkeit zur Erhöhung der Stabilität der fragilen Membranen - insbesondere bei mehrelementigen Strukturen, und damit der Fertigungsausbeute besteht darin, dass dünne Rippen 19 aus dem Membranmaterial zwischen Verbindungssteg 6 und Absorberbereich bzw. Verbindungssteg 6 und Tragkörper 2 bestehen bleiben. Der geätzte Spalt 7 wird dann an einigen Stellen gezielt durch verbleibende Rippen 19 unterbrochen. In Fig. 6 sind solche Rippen 19 dargestellt. Die Rippen 19 können an verschiedenen Stellen des Verbindungssteges angebracht sein, z.B. auch an allen vier Ecken des Absorbers, was die mechanische Stabilität der Anordnung erhöht.

In einer weiteren Ausführungsform können die bisher vorgestellten Thermopilezellen auch zu einer Arraystruktur mit m Zeilen und n Spalten zusammengesetzt werden. Ein Beispiel ist in Fig. 7 dargestellt.

Da eine solche Ausführungsform mit vielen Einzelelementen auf demselben Chip auch eine chipseitige Elektronik benötigt, sind in Fig. 7 a) die individuellen Thermopilezellen 20 mit geschlitzter Membran der Übersicht halber nur als kleine Vierecke angedeutet.

Eine solche sensornahe Elektronik 20 bzw. 22 kann z.B. Vorverstärker, Tiefpässe, Multiplexer, Adressregister, A/D-Wandler und Schnittstellen enthalten. Geeignete Schalttransistoren 21 zur Auswahl der einzelnen Sensorzelle befinden sich bevorzugt neben jeder Zelle, können aber auch bei geringer Elementanzahl auf den Chiprand gezogen werden.

Besonders günstig wirkt sich bei matrixförmiger Anordnung von Einzelelementen auf einem Chip aus, dass durch die großflächige Belegung mit Absorbermaterial 5 und die geraden Ätzwände im gesamten Substrat 2 im Zusammenspiel mit den schmalen Schlitzen 7 eine hohe Flächennutzung erreicht werden kann. Dies führt dazu, dass der für Array-Anwendungen wichtige Füllfaktor, das Verhältnis von Strahlung absorbierender und somit aktiver Fläche zu inaktiver Fläche, weiter erhöht werden kann.

Zum Betrieb der Array-Struktur müssen elektronische Baugruppen mit in das Substrat integriert werden. Einzelne Elemente können dabei innerhalb der Matrix aus Sensorelementen, zum Beispiel in den Eckpunkten zwischen den Elementen, angebracht werden. Weitere elektronische Baugruppen wie Vorverstärker, Tiefpassfilter, Multiplexer, Adressregister, Temperaturreferenzen, Spannungsreferenzen, Analog/Digitalwandler, Interfacebaugruppen und andere können in dem Randbereich der Arraystruktur untergebracht werden.

Außerhalb des optisch aktiven Bereiches haben sie somit keinen negativen Einfluss auf den Füllfaktor. Weiter kann die in den elektronischen Baugruppen entstehende Verlustwärme einfacher nach außen abgeführt werden. Für diese Ausführungsform ist es von besonderer Bedeutung, dass alle verwendeten Prozesse mit Standard CMOS Abläufen kompatibel sind. Nur wenn die verwendeten Materialien und die notwendigen Prozesse zu keinem Konflikt mit Standard-CMOS-Abläufen führen, lässt sich die Aufgabe lösen, die beschriebenen Infrarot empfindlichen Sensorelemente mit der benötigten Ausleseelektronik monolithisch zu integrieren.

Durch diesen Integrationsschritt lässt sich auch erreichen, dass die Sensorsteuerung und die Ausgabe der Sensorsignale über wenige Ein - und Ausgänge zu bewerkstelligen ist. Damit entfallen aufwändige Drahtbondverbindungen 11 und eine kostengünstige Massenfertigung solcher Arraysensoren wird erleichtert.

Enthält die pixelnahe Elektronik außer Vorverstärkern auch Tiefpässe, so kann die Rauschbandbreite des Systems verringert, und der Signal/Rausch-Abstand erhöht werden, was die erzielbare Nachweisbarkeit und Messgenauigkeit erhöht.

Fig. 1 zeigt einen erfindungsgemäßen Sensorchip in einem Gehäuse. Dazu werden die beschriebenen Sensorchips als Einzelelement oder als Arraystruktur auf einer thermisch gut leitenden Bodenplatte 10, beispielsweise aus Metall, Keramik oder metallbeschichtetem Kunststoff (Leiterplatte), aufgebaut.

Notwendige Steuereingänge und Signalausgänge werden, vorzugsweise über Drahtbondverbindungen 11, mit den elektrischen Kontaktflächen des Substratträgers verbunden. Der Sensoraufbau wird dann mit einer ebenfalls thermisch gut leitenden Kappe 12, vorzugsweise aus Nickel, Aluminium oder Kupfer, dicht verschlossen. In der Kappe 12 befindet sich ein optisches Fenster 13 aus Infrarot durchlässigem Material, durch das die zu detektierende Infrarotstrahlung auf den Sensorchip 1 gelangt.

Innerhalb des abgeschlossenen Gehäuses befindet sich eine Atmosphäre aus Gas 15 bei Normaldruck oder einem Restgas bei reduziertem Druck. Die Vorteile der beschriebenen Erfindung kommen zum Tragen, wenn die Wärmeleitung dieser Atmosphäre deutlich geringer ist als die der Normalatmosphäre oder einer trockenen Stickstoffatmosphäre bei Normaldruck.

Zwei weitere Ausführungsformen sind dargestellt. In der ersten Ausführungsform wird der Druck des umgebenden Gases verringert. Die besten Empfindlichkeiten werden erreicht, wenn ein Vakuumgehäuseaufbau verwendet wird, aber auch Zwischenstufen sind denkbar. Nachteil des Vakuumgehäuses ist, dass das gesamte Gehäuse absolut hermetisch gasdicht sein muss und über mehrere Jahre keine Änderung des Gasdruckes erfolgen darf. Dies erfordert eine aufwändige und damit teure Gehäusetechnologie.

In der zweiten Ausführungsform wird das Gehäuse unter Normaldruck mit einem Gas mit geringerer thermischer Wärmeleitung wie z.B. Krypton oder Xenon gefüllt. Dadurch erhöht sich ebenfalls die Empfindlichkeit des Sensors aber die Anforderungen an die Gehäusetechnologie sind geringer.

Die Wahl der Ausführungsform als Vakuumgehäuse oder mit einer Gasfüllung aus thermisch gering leitendem Gas wirkt sich auch auf die Optimierung des Sensorchipentwurfes aus. So zeigen Simulationsrechnungen dass die optimale Anzahl der Thermoelemente bei Verwendung einer Vakuumgehäusetechnologie sehr gering sein sollte. Vorzugsweise sollten nicht mehr als vier bis acht Thermoelemente pro Sensorelement verwendet werden um eine möglichst hohe Detektivität der Thermopiles zu erreichen. Diese Thermoelemente verteilen sich dann auf die Anzahl der Verbindungsstege 6, die die Membran 3 tragen.

Wählt man dagegen einen Gehäuseaufbau mit thermisch gering leitendem Gas, so kann eine höhere Anzahl von Thermoelementen gewählt werden. Für die beschriebene Erfindung liegt die bevorzugte Anzahl von Thermoelementen zwischen 6 und 16 Elementen pro Thermopile, wenn eine Füllung des Sensorgehäuses mit Xe oder Kr vorgesehen ist.

Die thermische Zeitkonstante des Sensors ergibt sich als Quotient aus Wärmekapazität des empfindlichen Bereiches und dem thermischen Leitwert zwischen warmen und kalten Kontakten 8, 9. Wird die Erhöhung von Empfindlichkeit und Detektivität durch eine Verringerung des thermischen Leitwertes erreicht, so ergibt sich als Nachteil, dass die Zeitkonstante steigt und die Ansprechgeschwindigkeit des Sensors geringer wird.

Aus diesem Grund ist es von besonderer Bedeutung dass die erfindungsgemäße Absorberschicht 5 nicht nur zu einer hohen Absorption von Infrarotstrahlung im empfindlichen Bereich führt, sondern selbst eine geringe Schichtdicke und damit eine kleine thermische Masse aufweist.

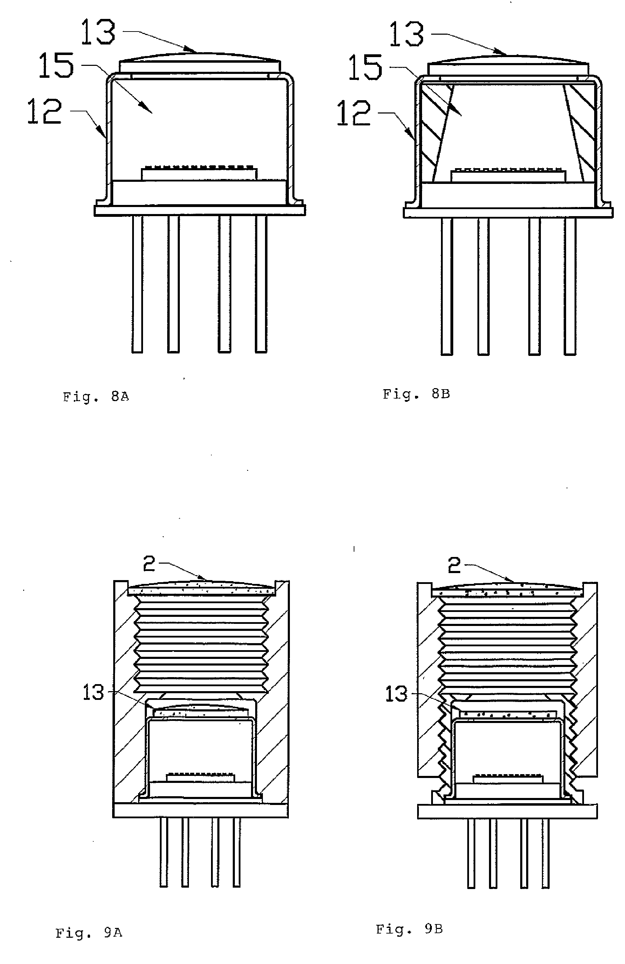

Fig. 8 zeigt eine Ausführungsform der zu einem Array angeordneten Sensorelemente, bei der die Optik 13 in der Kappe 12 bevorzugt durch eine Infrarot-Linse gebildet wird. Sowohl der Sensorchip als auch die Linse sollten innerhalb des Sensorgehäuses zueinander zentriert werden. Die Kappenhöhe muss so angepasst werden, dass die Infrarotstrahlung scharf auf die Sensorelemente abgebildet wird. Prinzipiell kann statt der Optik auch eine Filterscheibe verwendet werden. In dem Fall muss sich die Linse außerhalb des Gehäuses befinden.

Der Sichtbereich zwischen Sensor und Linse ist bevorzugt nicht reflektierend, bzw. mit Elementen zur Verminderung von Streustrahlungen versehen. Die Atmosphäre 15 im Sensorgehäuse weist vorzugsweise eine geringe Wärmeleitfähigkeit auf.

Durch die Verwendung einer abbildenden Optik zusammen mit den zu einem Array angeordneten Sensorelementen wird eine räumlich aufgelöste Infrarotmessung möglich. Von besonderem Vorteil ist der Einsatz einer sphärischen oder asphärischen plankonvexen Linse. Diese lässt sich zum einen kostengünstig fertigen und zum anderen stellt die Planseite eine geeignete Dichtungsfläche für den Einbau in ein gasdichtes Gehäuse dar.

Je nach Atmosphäre 15 innerhalb des Sensorgehäuses kann der Einbau der Linse 13 innerhalb der Kappe 12 mit Planseite nach außen oder außerhalb auf die Kappe 12 mit Planseite zum Sensorinnern vorteilhafter sein. Der Einbau erfolgt bevorzugt in der Art und Weise, dass eine Druckdifferenz zwischen dem Gehäuseinnerem und der äußeren Umgebung die Dichtfläche der Linse 13 zusätzlich an die Kappe 12 anpresst.

Die beschriebene Ausführungsform kann dadurch erweitert werden, dass eine zweite Linse 23 in einem vorgegebenen Abstand vor der ersten Linse 13 oder dem Filter montiert wird und damit verbesserte Abbildungseigenschaften erreicht werden (Fig. 9a). Diese zweite Linse 20 kann eine beliebige sphärische oder asphärische Form haben, je nach den gewünschten optischen Erfordernissen.

Der Tubus zwischen erster Linse 13 und zweiter Linse 23 muss dabei keine besondere Atmosphäre aufweisen und nicht gas- oder vakuumdicht sein. Der Bereich zwischen den beiden Linsen 13, 23 kann offen zur Normalatmosphäre sein. Der Bereich zwischen den beiden Linsen 13, 23 ist vorzugsweise nicht reflektierend und besteht aus einem gut Wärme leitenden Material.

In einer weiteren Ausführungsform kann der Abstand der zweiten Linse 23 gegenüber der in der Kappe 12 montierten Linse 13, bzw. Fenster verändert werden, so dass sich die Abbildungseigenschaften der abbildenden Optik verändern (Fig. 9b). Prinzipiell kann die Optik auch aus einem Abbildenden Spiegel innerhalb oder außerhalb der Kappe in Verbindung mit einem abdichtenden Filter oder einer abdichtenden Linse in der Kappe ausgeführt werden (nicht dargestellt).

### Bezugszeichenliste

- 1: Sensorzelle (Chip)
- 2: Tragkörper
- 3: Membran
- 4: zentraler empfindlicher Bereich
- 5: Absorberschicht
- 6: Verbindungsstege
- 7: Schlitze zur Isolation
- 8: Kalte Kontakte
- 9: Heiße Kontakte
- 10: Bodenplatte
- 11: Verbindungsdrähte
- 12: Kappe
- 13: Optik/ erste Linse
- 14: externe Anschlüsse
- 15: Gas oder Gasgemisch
- 16: Thermoschenkel/Thermoelement
- 17: Thermische Ausgleichsschicht
- 18: Rippe
- 19: Rippe
- 20: sensornahe Elektronik auf Chip
- 21: individuellen Thermopilezellen
- 22: Schalttransistor
- 23: Zweite Linse
- 24: Wendestelle

## Patentansprüche

1. Thermischer Infrarot Sensor in einem Gehäuse mit Optik sowie einem Chip mit Thermoelementen in Form von Thermopile-, Bolometer- oder pyroelektrischen Sensorstrukturen auf einer Membran, die über einem gut Wärme leitenden rahmenförmigen Tragkörper aufgespannt ist, wobei der Tragkörper senkrechte oder annähernd senkrechte Wände aufweist, **gekennzeichnet dadurch,**
- **dass** die Thermopile-Sensorstruktur aus wenigen, langen Thermoelementen (16) pro Sensorzelle (1) besteht, die auf Verbindungsstegen (6) angeordnet sind, welche die heißen Kontakte (9) auf einer Absorberschicht (5) auf der Membran (3) mit den kalten Kontakten (8) der Thermoelemente (16) miteinander verbinden;
- dass die Membran (3) über einen oder mehrere Verbindungsstege (6) aufgehängt ist;
- **dass** die Membran (3) beiderseits der langen Thermoelemente (16) schmale Schlitze aufweist, die die Verbindungsstege (6) sowohl vom zentralen Bereich (4), als auch vom Tragkörper (2) trennen, und
- **dass** mindestens der zentrale Bereich (4) von der Absorberschicht (5) überdeckt wird.

2. Thermischer Infrarot Sensor nach Anspruch 1, **gekennzeichnet dadurch, dass** die Thermoelemente (16) auf den langen schmalen Verbindungsstegen (6) um den Absorberbereich herumgeführt sind, wobei die Länge eines Verbindungssteges (6) mindestens der halben Länge, vorzugsweise der ganzen Seitenlänge des Absorberbereiches entspricht.

3. Thermischer Infrarot Sensor nach einem der vorgenannten Ansprüche, **gekennzeichnet dadurch, dass** die Thermoelemente (16) auf den langen, schmalen Verbindungsstegen (6) um den Absorberbereich herumgeführt sind, wobei die Länge eines Verbindungssteges (6) der gesamten bis doppelten Seitenlänge des Absorberbereiches entspricht.

4. Thermischer Infrarot Sensor nach einem der vorgenannten Ansprüche, **gekennzeichnet dadurch, dass** die Thermoelemente (16) auf langen, schmalen Verbindungsstegen (6) um den Absorberbereich herumgeführt sind, wobei die Verbindungsstege (6) mindestens eine Umkehrstelle (24) aufweisen.

5. Thermischer Infrarot Sensor nach einem der vorgenannten Ansprüche, **gekennzeichnet dadurch, dass** die schmalen Verbindungsstege (6) von mehreren Seiten an den Absorberbereich herangeführt sind.

6. Thermischer Infrarot Sensor nach einem der vorgenannten Ansprüche, **gekennzeichnet dadurch, dass** die Thermopile-Sensorstrukturen aus n- und p-leitendem Poly Si bestehen und in einem CMOS-Prozess hergestellt werden.

7. Thermischer Infrarot Sensor nach Anspruch 5, **gekennzeichnet dadurch, dass** die über den Thermopilestrukturen, beim Halbleiterprozess entstehenden Isolations- und Passivierungsschichten teilweise von der Oberseite her wieder entfernt sind.

8. Thermischer Infrarot Sensor nach einem der vorgenannten Ansprüche, **gekennzeichnet dadurch, dass** sich die dünne Absorberschicht (5) (zur Erhöhung des Füllgrades mindestens teilweise auch) auf die Verbindungsstege (6) erstreckt.

9. Thermischer Infrarot Sensor nach einem der vorgenannten Ansprüche, **gekennzeichnet dadurch, dass** die Membran (1) im Absorberbereich mit einer oder mehreren Poly Si Schichten ausgefüllt ist.

10. Thermischer Infrarot Sensor nach einem der vorgenannten Ansprüche, **gekennzeichnet dadurch, dass** die Poly Silizium Schichten im Absorberbereich derart strukturiert sind, dass diese eine von der Mitte der Absorberschicht (5) ausgehende Kreuzform aufweisen und dass die Enden des Kreuzes die "heißen Kontakte umschließen oder nur einseitig zu berühren.

11. Thermische Infrarot Sensor nach einem der vorgenannten Ansprüche, **gekennzeichnet dadurch, dass** die langen dünnen Verbindungsstege (6) mit den Thermoelementen mindestens an einer Stelle durch einen Stabilisierungssteg mit dem benachbarten Substratkörper bzw. dem Absorberbereich (2) verbunden sind.

12. Thermischer Infrarot Sensor nach einem der vorgenannten Ansprüche, **gekennzeichnet dadurch, dass** mehrere Sensorzellen in Zeilen- oder Arrayform auf dem gleichen Sensorchip eng benachbart angeordnet sind.

13. Thermischer Infrarot Sensor nach einem der vorgenannten Ansprüche, **gekennzeichnet dadurch, dass** mehrere Sensorzellen (1) in Zeilen- oder Arrayform auf dem gleichen Sensorchip eng benachbart angeordnet und dass mindestens ein Teil der Signalverarbeitung auf dem gleichen Halbleitersubstrat integriert ist.

14. Thermischer Infrarot Sensor nach einem der vorgenannten Ansprüche, **gekennzeichnet dadurch, dass** die in Zeilen- oder Arrayform angeordneten Sensorzellen (1) je eine elektronische Signalverarbeitungseinheit pro Einzelzelle oder mindestens pro vier Einzelzellen gemeinsam aufweisen.

15. Thermischer Infrarot Sensor nach einem der vorgenannten Ansprüche, **gekennzeichnet dadurch, dass** die Optik (13) eine Filterscheibe oder eine abbildende Linse ist.

16. Thermischer Infrarot Sensor nach einem der vorgenannten Ansprüche, **gekennzeichnet dadurch, dass** die Optik aus einer fest im Gehäuse eingebauten ersten Linse (13), und einer sich außerhalb des Gehäuses befindlichen zweiten Linse (23) besteht (wobei beide Linsen zusammen die optische Abbildung erzeugen).

17. Thermischer Infrarot Sensor nach einem der vorgenannten Ansprüche, **gekennzeichnet dadurch, dass** die Optik aus einer fest im Gehäuse eingebauten ersten Linse (13) und einer sich außerhalb des Gehäuses befindlichen zweiten Linse (23) besteht, wobei die zweite Linse (23) (nicht gasdicht montiert sondern auswechselbar ist).

18. Thermischer Infrarot Sensor nach einem der vorgenannten Ansprüche, **gekennzeichnet dadurch, dass** die Optik aus einer fest im Gehäuse eingebauten ersten Linse (13), und einer sich außerhalb des Gehäuses befindlichen zweiten Linse (23) besteht, wobei die zweite Linse über eine Justiereinrichtung im Abstand zum Sensorelement verstellbar ist.
